# EUROPEAN PATENT APPLICATION

(11) **EP 4 723 427 A1**
(43) Date of publication of application: **08.04.2026**
(21) Application number: 25200141.7
(22) Date of filing: 04.09.2025
(51) Int. Cl.: H02J 7/94, H02J 7/60, H02J 7/50, H02J 7/96, H02J 7/52

(54) **TECHNIQUES FOR CHARGING BATTERIES IN PARALLEL**

(30) Priority: 06.09.2024 US 202418826582
(71) Applicant: Schneider Electric IT Corporation, Foxboro, MA 02035 (US)
(72) Inventor: LIPARE, Mahendrakumar H., 560092 Bangalore (IN); NAGABHUSHANRAO, Pradeep Tolakanahalli, 560-070 Bangalore (IN); SURESH, Anil Cheniveettil, 560067 Malappuram DT (IN); S, Manjeshkumar, 560067 Bangalore (IN)
(74) Representative: Plasseraud IP

(57) **Abstract**

A charging apparatus is provided according to some embodiments. The charging apparatus includes (1) charging circuitry configured to connect to a plurality of battery packs in parallel and (2) processing circuitry configured to control the charging circuitry by: (a) obtaining a voltage reading from each of the plurality of battery packs; (b) initially setting a charging voltage of a charger to a lowest voltage reading obtained from any of the plurality of battery packs; (c) while applying the charging voltage to the plurality of battery packs, obtaining a current reading from each of the plurality of battery packs that is charging; and (d) in response to the obtained current reading from a battery pack being below a minimum threshold current, increasing the charging voltage by a voltage step value. A similar method and computer program product are also provided.

## Description

### BACKGROUND

Uninterruptible Power Supply (UPS) units provide a backup source of power to electrical equipment in the event of a power failure. UPS units can utilize one or more batteries to provide the backup power. Although various types of batteries may be used, in recent years, use of lithium-ion (Li-Ion) batteries has become more popular due to their high energy density and long lifespan. Since overcharging Li-ion batteries, deeply discharging Li-ion batteries, or charging Li-ion batteries too quickly can result in damage, Li-Ion battery packs may be equipped with a battery management system (BMS) to protect against overcharging, deep discharge, and charging at too high of a voltage differential.

### SUMMARY

Methods of charging, charging apparatuses, uninterruptible power supply units and computer program products are provided as per the appended claims.

### BRIEF DESCRIPTION OF THE DRAWINGS

The foregoing and other objects, features and advantages will be apparent from the following description of particular embodiments of the invention, as illustrated in the accompanying drawings in which like reference characters refer to the same parts throughout the different views. The drawings are not necessarily to scale, emphasis instead being placed upon illustrating the principles of various embodiments of the invention.
Fig. 1 illustrates an example system, apparatus, signals, and computer program product for use in connection with one or more embodiments.
Fig. 2 illustrates an example method in accordance with one or more embodiments.
Fig. 3 illustrates an example usage scenario in accordance with one or more embodiments.

### DETAILED DESCRIPTION

As discussed above, Li-Ion battery packs may be equipped with a battery management system (BMS) to protect against overcharging, deep discharge, and charging at too high of a voltage differential. In many systems this protection may include a charge protection switch and/or a discharge protection switch, configured to block normal charging by switching to a trickle charging circuit.

Unfortunately, although trickle charging can guard against charging at too high of a voltage differential (i.e., "overcurrent" charging), because it is so slow (e.g., it may take six times longer to charge), it can prevent a battery pack from getting charged in a timely manner. In addition, the charge protection switch is especially likely to activate trickle charging when multiple battery packs are attached to a charger in parallel. For instance, if the battery packs have an uneven level of charge, then the charger may begin supplying charging current based on the voltage of the battery with more charge, which may result in the battery with less charge receiving charging current with too high of a voltage differential, causing the BMS to activate the trickle charger to prevent damage to the lower voltage battery. Unfortunately, this can prevent the lower voltage battery from catching up to the higher voltage battery unless a very long period of time elapses. Although it is possible to avoid this problem by using separate chargers for each battery pack, doing so can be cost prohibitive.

Thus, it would be desirable to implement a system for a single charger to charge multiple battery packs with charge protection switches in parallel, while minimizing or reducing the risk of setting off trickle charging. This may be accomplished by having the charger initially set to charge at the lowest voltage of any of the multiple battery packs to which it is attached in parallel and then incrementally increasing the charging voltage in response to the current drawn by one or more of the multiple battery packs falling outside a prescribed range. In some examples, an uninterruptible power supply unit comprises a charging apparatus and a plurality of battery packs as hereby described. The battery packs may be Li-Ion battery packs or may be based on technologies other than Li-Ion

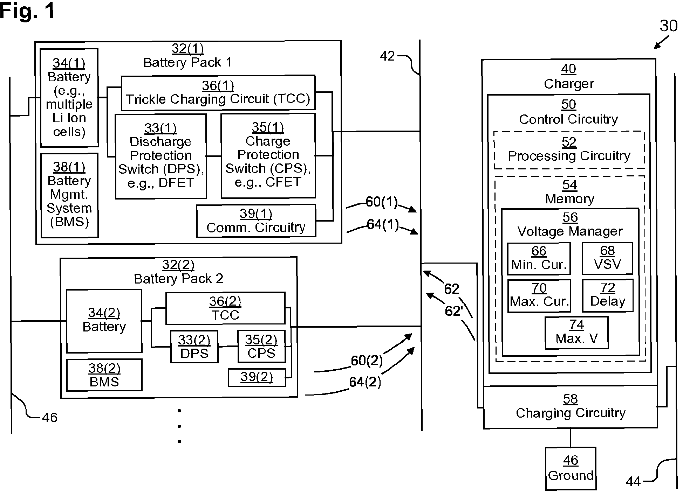

Fig. 1 depicts an example system 30 for use in connection with various embodiments described herein. System 30 includes a set of two or more batteries 32 (depicted as batteries 32(1), 32(2), . . .) connected to a charger apparatus 40 via a charging line 42.

Each battery pack 32 includes a battery 34 that connects to ground 46 and to the charging line 42 via two parallel paths. One path includes a discharge protection switch (DPS), such as a discharge field effects transistor (DFET) 33, and a charge protection switch (CPS) 35, such as a charge field effects transistor (CFET). The other path includes a trickle charging circuit (TCC) 36 configured to only allow a trickle of current to pass through. As long as the DPS 33 and CPS 35 remain closed, charging current from the charger 40 may pass through the first path, allowing standard charging of the battery pack 34. However, if the CPS 35 opens, then no current passes across the first path, and charging current from the charger 40 can only pass across the second path, via the TCC 36. In some embodiments, a BMS 38 operates to control the DPS 33 and CPS 35. DPS 33 is configured to open in the event that the voltage of the battery pack 34 exceeds the charging voltage to prevent the battery 32 from discharging into the charger 40. CPS 35 is configured to open under various circumstances, such as, for example, in the event that the charging voltage exceeds the battery voltage by more than a certain amount (e.g., 0.5 V, 1 V, etc.) or if the BMS 38 determines that the battery pack 34 is full.

Charger 40 includes control circuitry 50 and charging circuitry 58. Charging circuitry obtains power from a power grid 44 and ground 46 and uses that power to provide a charging current to the battery packs 32 via charging line 42. Control circuitry 50 implements a voltage manager 56 that determines what voltage the charging circuitry 58 should provide to the charging line 42. In some embodiments, control circuitry 50 directly implements logic of the voltage manager in dedicated circuits. In other embodiments, control circuitry includes processing circuitry 52 coupled to memory 54, the voltage manager 56 being made up of computer code or instructions stored within the memory 54 and executing on the processing circuitry 52. Processing circuitry 52 may include any kind of processor or set of processors configured to perform operations, such as, for example, a microprocessor, a multi-core microprocessor, a digital signal processor, a system on a chip, a collection of electronic circuits, a similar kind of controller, or any combination of the above. Memory 54 may include any kind of digital system memory, such as, for example, random access memory (RAM), read-only memory (ROM), one-time programmable (OTP) memory, and/or flash memory.

In operation, communication circuitry 39(X) for each battery pack 32(X) initially sends the voltage 60(X) of the battery 32(X) of that battery pack 32(X) to the voltage manager 56. In some embodiments, this communication may be sent using networking circuitry, while in other embodiments, this communication may be sent by modulating a signal over the charging line 42. In the context of this disclosure, the term 'voltage reading' may be understood to refer to a terminal voltage (such as voltage 60(X)) of each battery in the plurality of battery packs. The terminal voltage of a battery would be the voltage measured at the battery terminals during charging.

Voltage manager 56 then determines the value of an initial charging voltage 62 and instructs the charging circuitry 58 to provide the initial charging voltage 62 to the charging line 42. The initial charging voltage 62 is determined with reference to the lowest-valued voltage 60 of all of the battery packs 32. For example, voltage manager 56 may set the initial charging voltage 62 to be equal to the lowest-valued voltage 60 of all of the battery packs 32. As another example, voltage manager 56 may set the initial charging voltage 62 to be equal to the lowest-valued voltage 60 of all of the battery packs 32 plus an offset (e.g., 0.5V).

Once charging begins, communication circuitry 39(X) for each battery pack 32(X) that is charging reports the current 64(X) being drawn by that battery pack 32(X) to the voltage manager 56. In some embodiments, any battery pack 32(X) whose DPS 33 is open does not report its current 64(X). In other embodiments, even a battery pack 32(X) whose DPS 33 is open reports its current 64(X), but voltage manager 56 ignores such readings.

If the current 64 for every reporting battery pack 32 (aside from those whose DPS 33 is open) is below a minimum threshold current value 66 (e.g., 1.0 A), then voltage manager 56 sets a new charging voltage 62' for the charging circuitry 58 to provide by increasing the initial voltage 62 by a voltage step value (VSV) 68 (e.g., 0.5 V). In some embodiments, the increase is halted if the CPS 35 of any of the battery packs 32 is open or if any of the battery packs 32 is in an error state.

In some embodiments, if the current 64 for any battery pack 32 is above a maximum threshold current value 70 (e.g., 2.5 A), then voltage manager 56 sets the new charging voltage 62' by decreasing the previous voltage 62 by a reduced version of VSV 68 (e.g., by dividing the VSV 68 in half, such as from 0.5 V to 0.25 V). In some embodiments, once this occurs, the VSV 68 itself is reduced going forward (e.g., by cutting it in half, such as from 0.5 V to 0.25 V). In some embodiments, the voltage step value is decreased progressively at different decreasing values.

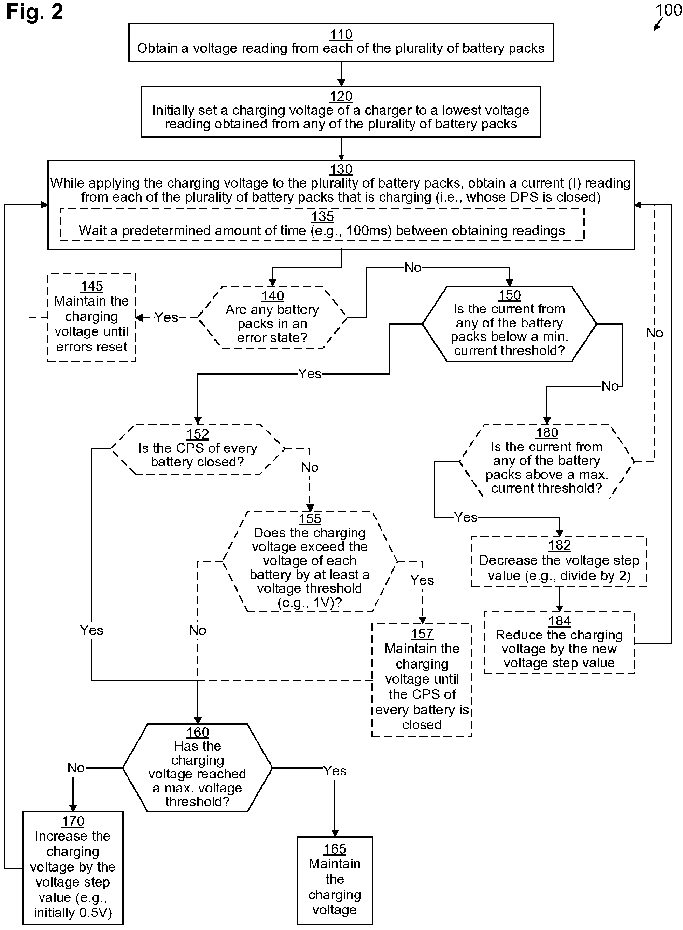

Fig. 2 illustrates an example method 100 performed by a system 30 for parallel battery charging. It should be understood that any time a piece of software (e.g., voltage manager 56) is described as performing a method, process, step, or function, what is meant is that a computing device (e.g., charger 40) on which that piece of software is running performs the method, process, step, or function when executing that piece of software on its processing circuitry 52. It should be understood, that one or more of the steps or sub-steps of method 100 may be omitted in some embodiments. Similarly, in some embodiments, one or more steps or sub-steps may be combined or performed in a different order. Dashed lines indicate alternate embodiments or use cases.

In step 110, voltage manager 56 obtains a voltage reading 60 from each of the plurality of battery packs 32. For example, the voltage readings 60 may come from the respective communication circuitry 39 of each battery pack 32.

In step 120, voltage manager 56 initially sets an initial charging voltage 62 to be provided by the charging circuitry 58 of the charger 40 to the lowest of the received voltage readings 60 (or, in some embodiments, to that lowest value plus an offset, such as 0.5 V).

In step 130, while charging circuitry 58 applies the charging voltage (e.g., the initial charging voltage 62 the first time or first several times step 130 is performed; or the updated charging voltage 62' once step 170 or 184 is performed) to the plurality of battery packs 32 via charging line 42, voltage manager 56 obtains a respective current reading 64(X) from each of the battery packs 32(X) that is charging (i.e., omitting any whose DPS 33 is open). In some embodiments, step 130 includes sub-step 135 in which a predetermined amount of time or delay 72 (e.g., 100 ms, 1 second, 1 minute, etc.) elapses between subsequent current readings 64.

In some embodiments, in step 140, voltage manager 56 determines whether any of the battery packs 32 is in an error state, and, if so, in step 145, voltage manager 56 maintains the present charging voltage 62, 62' until all errors have reset, after which operation returns back to step 120. Otherwise, operation proceeds with step 150.

In step 150, voltage manager 56 determines whether the received current readings 64 from any of the battery packs 32 (leaving aside those whose DPS 33 is open) is below a minimum current threshold (e.g., 1.0 A). If so, operation proceeds either directly with step 160, or, in some embodiments, first with step 152. Otherwise, operation proceeds either directly back to step 130 or, in some embodiments, first with step 180.

In step 152, voltage manager 56 determines whether the CPS 35 of every battery pack 32 is closed. If so, operation proceeds with step 160. Otherwise, operation proceeds with step 155. In step 155, voltage manager 56 determines whether the charging voltage 62, 62' exceeds the voltage of the battery pack 32 with the highest voltage by at least a threshold value (e.g., 1 V). If so, then, in step 157, voltage manager 56 maintains the present charging voltage 62, 62' until the CPS 35 of every battery back 32 closes. Otherwise, operation proceeds with step 160.

In step 160, voltage manager 56 determines whether the present charging voltage 62, 62' has reached a maximum voltage threshold 74 (e.g., 58 V). If so, then, in step 165, voltage manager 56 maintains the present charging voltage 62, 62' without change until all the battery packs 32 are fully charged. Otherwise, operation proceeds with step 170.

In step 170, voltage manager 56 increases the charging voltage 62, 62' by the VSV 68, and then operation returns back to step 130. The VSV 68 has an initial value (e.g., 0.5 V), although it may decrease due to operation of step 182.

In step 180, voltage manager 56 determines whether the received current readings 64 from any of the battery packs 32 is above the maximum current threshold 70 (e.g., 2.5 A). If so, operation proceeds with step 182. Otherwise, operation proceeds back to step 130.

In step 182, voltage manager 56 decreases the VSV 68. For example, the VSV 68 may be halved. Thus, if the VSV 68 is initially 0.5 V, after step 182 is performed once, it decreases to 0.25 V; after step 182 is performed twice, it decreases to 0.125 V, etc. ). Indeed, in some embodiments, the voltage step value is decreased progressively at different successive decreasing values.

Then, in step 184, voltage manager 56 decreases the charging voltage 62, 62' by the (newly modified) VSV 68. Operation then returns back to step 130.

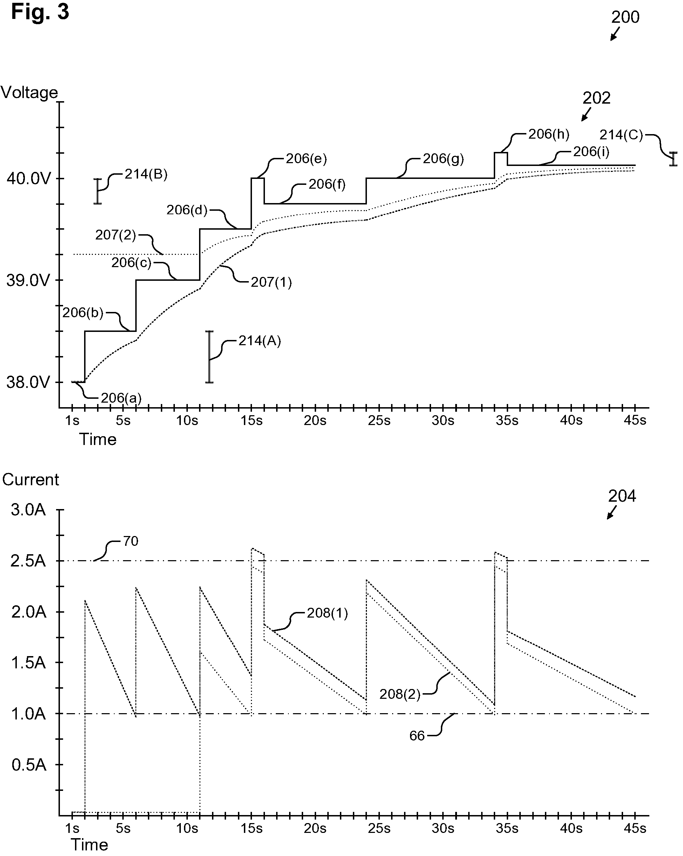

Fig. 3 illustrates an example usage scenario 200, including a voltage graph 202 of voltage versus time and a current graph 204 of current versus time. In this usage scenario 200, there are two battery packs 32(1), 32(2) which are both connected to the same charger 40. Voltage graph 202 shows how the voltage 207(1) of battery pack 32(1) and the voltage 207(2) of battery pack 32(2) vary over time. The charging voltage 62, 62' is depicted as a step function 206 with initial value (representing initial voltage 62) 206(a) and subsequent values of 206(b), 206(c), . . . , 206(i). The initial VSV 68, 214(A) is shown as 0.5 V, and voltage graph 202 also depicts how the VSV 68 evolves to revised values 214(B), 214(C) of 0.25 V and 0.125 V, respectively. As depicted, the initial voltage 207(1) of battery pack 32(1) is 38.0 V, and the initial voltage 207(2) of battery pack 32(2) is 39.25 V.

Current graph 204 shows how the current 208(1) of battery pack 32(1) and the current 208(2) of battery pack 32(2) vary over time. The minimum threshold current 66 is 1.0 A, and the maximum threshold current 70 is 2.5 A. As depicted in usage scenario 200, the delay 72 between current readings is 1 second.

At time = 1 second, voltage manager 56 receives the initial voltage signals 60(1) = 38.0 V, 60(2) = 39.25 V (step 110) and sets the initial charging voltage 62, 206(a) to the lower voltage of 38.0V (step 120). Since there is zero voltage differential for battery pack 32(1), the charging current 208(1) for battery pack 32(1) is initially zero (or just above zero due to the TCC 36(1)). Since the voltage differential for battery pack 32(2) is negative, DPS 33(2) opens to prevent discharge, and the charging current 208(2) for battery pack 32(2) is initially zero (or just above zero due to the TCC 36(2)).

At time = 2 seconds, voltage manager 56 receives the (almost) zero charging current 208(1) (but not 208(2) because DPS 33(2) is open) (step 130). Since neither battery pack 32 is in an error state (step 140); the charging current 208(1) of battery 32(1) is (almost) zero, which is less than the minimum threshold current 66 of 1 A (step 150); the CPSes 35 are all closed (step 152); and the charging voltage of 38.0 V is less than the maximum charging voltage 74 of 58.0 V (step 160); voltage manager 56 increases the charging voltage 206(b) starting at 2 seconds by the voltage step value up to 38.5 V (step 170). Since the voltage differential for battery pack 32(1) is now positive, the charging current 208(1) for battery pack 32(1) immediately jumps up and begins to decrease as battery pack 32(1) charges. Since the voltage differential for battery pack 32(2) remains negative, DPS 33(2) remains open to prevent discharge, and the charging current 208(2) for battery pack 32(2) remains zero (or just above zero due to the TCC 36(2)).

At time = 3 seconds (and again at time = 4 and 5 seconds), voltage manager 56 receives the charging current 208(1) (but not 208(2) because DPS 33(2) is open) (step 130). Since neither battery pack 32 is in an error state (step 140); the charging current 208(1) of battery 32(1) is greater than the minimum threshold current 66 of 1.0 A (step 150); and the charging current 208(1) of battery 32(1) is less than the maximum threshold current 70 of 2.5A (step 180); operation returns back to step 130; and the delay 72 (e.g., 1 second) is allowed to elapse (sub-step 135). Since the voltage differential for battery pack 32(2) remains negative, DPS 33(2) remains open to prevent discharge, and the charging current 208(2) for battery pack 32(2) remains zero (or just above zero due to the TCC 36(2)).

At time = 6 seconds, voltage manager 56 receives the charging current 208(1) (but not 208(2) because DPS 33(2) is open) (step 130). Since neither battery pack 32 is in an error state (step 140); the charging current 208(1) of battery 32(1) is now just below the minimum threshold current 66 of 1.0 A (step 150); the CPSes 35 are all closed (step 152); and the charging voltage of 38.5 V is less than the maximum charging voltage 74 of 58.0 V (step 160); voltage manager 56 increases the charging voltage 206(c) starting at 6 seconds by the VSV 68, 214(A) up to 39.0 V (step 170). Since the voltage differential for battery pack 32(1) is now higher, the charging current 208(1) for battery pack 32(1) immediately jumps up and begins to decrease as battery pack 32(1) charges. Since the voltage differential for battery pack 32(2) remains negative, DPS 33(2) remains open to prevent discharge, and the charging current 208(2) for battery pack 32(2) remains zero (or just above zero due to the TCC 36(2)).

At time = 7 seconds (and again at time = 8, 9, and 10 seconds), voltage manager 56 receives the charging current 208(1) (but not 208(2) because DPS 33(2) is open) (step 130). Since neither battery pack 32 is in an error state (step 140); the charging current 208(1) of battery 32(1) is greater than the minimum threshold current 66 of 1.0 A (step 150); and the charging current 208(1) of battery 32(1) is less than the maximum threshold current 70 of 2.5A (step 180); operation returns back to step 130; and the delay 72 (e.g., 1 second) is allowed to elapse (sub-step 135). Since the voltage differential for battery pack 32(2) remains negative, DPS 33(2) remains open to prevent discharge, and the charging current 208(2) for battery pack 32(2) remains zero (or just above zero due to the TCC 36(2)).

At time = 11 seconds, voltage manager 56 receives the charging current 208(1) (but not 208(2) because DPS 33(2) is open) (step 130). Since neither battery pack 32 is in an error state (step 140); the charging current 208(1) of battery 32(1) is now just below the minimum threshold current 66 of 1.0 A (step 150); the CPSes 35 are all closed (step 152); and the charging voltage of 39.0 V is less than the maximum charging voltage 74 of 58.0 V (step 160); voltage manager 56 increases the charging voltage 206(d) starting at 11 seconds by the VSV 68, 214(A) up to 39.5 V (step 170). Since the voltage differential for battery pack 32(1) is now higher, the charging current 208(1) for battery pack 32(1) immediately jumps up and begins to decrease as battery pack 32(1) charges. Since the voltage differential for battery pack 32(2) is now positive, DPS 33(2) closes, and the charging current 208(2) for battery pack 32(2) immediately jumps up and begins to decrease as battery pack 32(2) charges.

At time = 12 seconds (and again at time = 13 and 14 seconds), voltage manager 56 receives the charging currents 208(1), 208(2) (step 130). Since neither battery pack 32 is in an error state (step 140); the charging currents 208(1), 208(2) are both greater than the minimum threshold current 66 of 1.0 A (step 150); and the charging currents 208(1), 208(2) are both less than the maximum threshold current 70 of 2.5A (step 180); operation returns back to step 130; and the delay 72 (e.g., 1 second) is allowed to elapse (sub-step 135).

At time = 15 seconds, voltage manager 56 receives the charging currents 208(1), 208(2) (step 130). Since neither battery pack 32 is in an error state (step 140); the charging current 208(2) of battery 32(2) is now just below the minimum threshold current 66 of 1.0 A (step 150) (even though the charging current 208(1) of battery 32(1) is still above the minimum threshold current 66 of 1.0 A); the CPSes 35 are all closed (step 152); and the charging voltage of 39.5 V is less than the maximum charging voltage 74 of 58.0 V (step 160); voltage manager 56 increases the charging voltage 206(e) starting at 11 seconds by the VSV 68, 214(A) up to 40.0 V (step 170). Since the voltage differentials for both battery packs 32(1), 32(2) are now higher, the charging currents 208(1), 208(2) immediately jump up and begin to decrease as battery packs 32(1), 32(2) charge.

At time = 16 seconds, voltage manager 56 receives the charging currents 208(1), 208(2) (step 130). Since neither battery pack 32 is in an error state (step 140); the charging currents 208(1), 208(2) are both greater than the minimum threshold current 66 of 1.0 A (step 150); and the charging current 208(1) of battery 32(1) exceeds the maximum threshold current 70 of 2.5A (step 180) (even though the charging current 208(2) of battery 32(2) is still below the maximum threshold current 70 of 2.5A); operation proceeds to step 180. At this point, the VSV 68 is reduced from the initial value of 214(A) of 0.5 V to the new value 214(B) of 0.25 V (step 182), and voltage manager 56 decreases the charging voltage 206(f) starting at 16 seconds by the new VSV 68, 214(B) down to 39.75 V (step 184). Since the voltage differentials for both battery packs 32(1), 32(2) are now lower, the charging currents 208(1), 208(2) immediately drop and continue to decrease further as battery packs 32(1), 32(2) charge.

At time = 17 seconds (and again at time = 18, 19, 20, 21, 22, and 23 seconds), voltage manager 56 receives the charging currents 208(1), 208(2) (step 130). Since neither battery pack 32 is in an error state (step 140); the charging currents 208(1), 208(2) are both greater than the minimum threshold current 66 of 1.0 A (step 150); and the charging currents 208(1), 208(2) are both less than the maximum threshold current 70 of 2.5A (step 180); operation returns back to step 130; and the delay 72 (e.g., 1 second) is allowed to elapse (sub-step 135).

At time = 24 seconds, voltage manager 56 receives the charging currents 208(1), 208(2) (step 130). Since neither battery pack 32 is in an error state (step 140); the charging current 208(2) of battery 32(2) is now just below the minimum threshold current 66 of 1.0 A (step 150) (even though the charging current 208(1) of battery 32(1) is still above the minimum threshold current 66 of 1.0 A); the CPSes 35 are all closed (step 152); and the charging voltage of 39.5 V is less than the maximum charging voltage 74 of 58.0 V (step 160); voltage manager 56 increases the charging voltage 206(g) starting at 24 seconds by the VSV 68, 214(B) up to 40.0 V (step 170). Since the voltage differentials for both battery packs 32(1), 32(2) are now higher, the charging currents 208(1), 208(2) immediately jump up and begin to decrease as battery packs 32(1), 32(2) charge.

At time = 25 seconds (and again at time = 26, 27, 28, 29, 30, 31, 32, and 33 seconds), voltage manager 56 receives the charging currents 208(1), 208(2) (step 130). Since neither battery pack 32 is in an error state (step 140); the charging currents 208(1), 208(2) are both greater than the minimum threshold current 66 of 1.0 A (step 150); and the charging currents 208(1), 208(2) are both less than the maximum threshold current 70 of 2.5A (step 180); operation returns back to step 130; and the delay 72 (e.g., 1 second) is allowed to elapse (sub-step 135).

At time = 34 seconds, voltage manager 56 receives the charging currents 208(1), 208(2) (step 130). Since neither battery pack 32 is in an error state (step 140); the charging current 208(2) of battery 32(2) is now just below the minimum threshold current 66 of 1.0 A (step 150) (even though the charging current 208(1) of battery 32(1) is still above the minimum threshold current 66 of 1.0 A); the CPSes 35 are all closed (step 152); and the charging voltage of 40.0 V is less than the maximum charging voltage 74 of 58.0 V (step 160); voltage manager 56 increases the charging voltage 206(g) starting at 34 seconds by the VSV 68, 214(B) up to 40.25 V (step 170). Since the voltage differentials for both battery packs 32(1), 32(2) are now higher, the charging currents 208(1), 208(2) immediately jump up and begin to decrease as battery packs 32(1), 32(2) charge.

At time = 35 seconds, voltage manager 56 receives the charging currents 208(1), 208(2) (step 130). Since neither battery pack 32 is in an error state (step 140); the charging currents 208(1), 208(2) are both greater than the minimum threshold current 66 of 1.0 A (step 150); and the charging current 208(1) of battery 32(1) exceeds the maximum threshold current 70 of 2.5A (step 180) (even though the charging current 208(2) of battery 32(2) is still below the maximum threshold current 70 of 2.5A); operation proceeds to step 180. At this point, the VSV 68 is reduced from the old value of 214(B) of 0.25 V to the new value 214(C) of 0.125 V (step 182), and voltage manager 56 decreases the charging voltage 206(f) starting at 35 seconds by the new VSV 68, 214(C) down to 40.125 V (step 184). Since the voltage differentials for both battery packs 32(1), 32(2) are now lower, the charging currents 208(1), 208(2) immediately drop and continue to decrease further as battery packs 32(1), 32(2) charge.

At time = 36 seconds (and again at time = 37, 38, 39, 40, 41, 42, 43, and 44 seconds), voltage manager 56 receives the charging currents 208(1), 208(2) (step 130). Since neither battery pack 32 is in an error state (step 140); the charging currents 208(1), 208(2) are both greater than the minimum threshold current 66 of 1.0 A (step 150); and the charging currents 208(1), 208(2) are both less than the maximum threshold current 70 of 2.5A (step 180); operation returns back to step 130; and the delay 72 (e.g., 1 second) is allowed to elapse (sub-step 135).

Further embodiments are provided in the form of numbered examples:
Example 1. A charging apparatus comprising:
   charging circuitry configured to connect to a plurality of battery packs in parallel; and
   processing circuitry configured to control the charging circuitry by:
      obtaining a voltage reading from each of the plurality of battery packs;
      initially setting a charging voltage of a charger to a lowest voltage reading obtained from any of the plurality of battery packs;
      while applying the charging voltage to the plurality of battery packs, obtaining a current reading from each of the plurality of battery packs that is charging; and
      in response to the obtained current reading from a battery pack being below a minimum threshold current, increasing the charging voltage by a voltage step value.
Example 2. The charging apparatus of example 1, wherein the processing circuitry is further configured to control the charging circuitry by, in response to any of the obtained current readings being above a maximum threshold current, decreasing the charging voltage by less than the voltage step value.
Example 3. The charging apparatus of example 1, wherein the processing circuitry is further configured to control the charging circuitry by, in response to any of the obtained current readings being above a maximum threshold current, decreasing the voltage step value.
Example 4. The charging apparatus of example 1, wherein obtaining the voltage reading from each of the plurality of battery packs includes receiving the voltage reading from each of the plurality of battery packs, the voltage readings having been sent by a respective battery management system of each of the plurality of battery packs.
Example 5. The charging apparatus of example 1, wherein obtaining the current reading from each of the plurality of battery packs that is charging includes receiving the current reading from each of the plurality of battery packs that is charging, the obtained current readings having been sent by a respective battery management system of each of the plurality of battery packs that is charging.
Example 6. The charging apparatus of example 1, wherein the processing circuitry is further configured to control the charging circuitry by, in response to detecting that (A) a charge protection switch of at least one battery pack of the plurality of battery packs is open and (B) the charging voltage exceeds a voltage of every battery pack of the plurality of battery packs by at least a threshold amount, maintaining the charging voltage until the charge protection switch of every battery pack of the plurality of battery packs is closed.
Example 7. The charging apparatus of example 6, wherein the threshold amount is 1 volt.
Example 8. The charging apparatus of example 1, wherein the processing circuitry is further configured to control the charging circuitry by, in response to detecting that the charging voltage has reached a maximum charge voltage threshold, maintaining the charging voltage at the maximum charge voltage threshold.
Example 9. A method of charging a plurality of battery packs in parallel, the method comprising:
   obtaining a voltage reading from each of the plurality of battery packs;
   initially setting a charging voltage to a lowest voltage reading obtained from any of the plurality of battery packs;
   while applying the charging voltage to the plurality of battery packs, obtaining a current reading from each of the plurality of battery packs that is charging; and
   in response to the obtained current reading from a battery pack being below a minimum threshold current, increasing the charging voltage by a voltage step value.
Example 10. The method of example 9, wherein the method further comprises, in response to any of the obtained current readings being above a maximum threshold current, decreasing the charging voltage by less than the voltage step value.
Example 11. The method of example 9, wherein the method further comprises, in response to any of the obtained current readings being above a maximum threshold current, decreasing the voltage step value.
Example 12. The method of example 9, wherein the method further comprises, in response to detecting that (A) a charge protection switch of at least one battery pack of the plurality of battery packs is open and (B) the charging voltage exceeds a voltage of every battery pack of the plurality of battery packs by at least a threshold amount, maintaining the charging voltage until the charge protection switch of every battery pack of the plurality of battery packs is closed.
Example 13. A computer program product comprising a non-transitory computer-readable storage medium storing instructions, which, when performed by processing circuitry of a charging apparatus, cause the charging apparatus to charge a plurality of battery packs in parallel by:
   obtaining a voltage reading from each of the plurality of battery packs;
   initially setting a charging voltage of the charging apparatus to a lowest voltage reading obtained from any of the plurality of battery packs;
   while applying the charging voltage to the plurality of battery packs, obtaining a current reading from each of the plurality of battery packs that is charging; and
   in response to the obtained current reading from a battery pack being below a minimum threshold current, increasing the charging voltage by a voltage step value.
Example 14. The computer program product of example 13, wherein the instructions, when performed by the processing circuitry, further cause the charging apparatus to, in response to any of the obtained current readings being above a maximum threshold current, decrease the charging voltage by less than the voltage step value.
Example 15. The computer program product of example 13, wherein the instructions, when performed by the processing circuitry, further cause the charging apparatus to, in response to any of the obtained current readings being above a maximum threshold current, decrease the voltage step value.
Example 16. The computer program product of example 13, wherein obtaining the voltage reading from each of the plurality of battery packs includes receiving, by processing circuitry of the charger, the voltage reading from each of the plurality of battery packs, the voltage readings having been sent by a respective battery management system of each of the plurality of battery packs.
Example 17. The computer program product of example 13, wherein obtaining the current reading from each of the plurality of battery packs that is charging includes receiving, by processing circuitry of the charger, the current reading from each of the plurality of battery packs that is charging, the obtained current readings having been sent by a respective battery management system of each of the plurality of battery packs that is charging.
Example 18. The computer program product of example 13, wherein the instructions, when performed by the processing circuitry, further cause the charging apparatus to, in response to detecting that (A) a charge protection switch of at least one battery pack of the plurality of battery packs is open and (B) the charging voltage exceeds a voltage of every battery pack of the plurality of battery packs by at least a threshold amount, maintain the charging voltage until the charge protection switch of every battery pack of the plurality of battery packs is closed.
Example 19. The computer program product of example 18, wherein the threshold amount is 1 volt.
Example 20. The computer program product of example 13, wherein the instructions, when performed by the processing circuitry, further cause the charging apparatus to, in response to detecting that the charging voltage has reached a maximum charge voltage threshold, maintain the charging voltage at the maximum charge voltage threshold.

While various embodiments of the invention have been particularly shown and described, it will be understood by those skilled in the art that various changes in form and details may be made therein without departing from the scope of the invention as defined by the appended claims.

It should be understood that although various embodiments have been described as being methods, software embodying these methods is also included. Thus, one embodiment includes a tangible computer-readable medium (such as, for example, a hard disk, a floppy disk, an optical disk, computer memory, flash memory, etc.) programmed with instructions, which, when performed by a computer or a set of computers, cause one or more of the methods described in various embodiments to be performed. Another embodiment includes a computer which is programmed to perform one or more of the methods described in various embodiments.

Furthermore, it should be understood that all embodiments which have been described may be combined in all possible combinations with each other, except to the extent that such combinations have been explicitly excluded.

Finally, nothing in this Specification shall be construed as an admission of any sort. Even if a technique, method, apparatus, or other concept is specifically labeled as "background" or as "conventional," Applicants make no admission that such technique, method, apparatus, or other concept is actually prior art, such determination being a legal determination that depends upon many factors, not all of which are known to Applicants at this time.

## Claims

1. A method of charging a plurality of battery packs (32) in parallel, the method comprising:
obtaining (110) a voltage reading (60) from each of the plurality of battery packs;
initially setting (120) a charging voltage (62) to a lowest voltage reading obtained from any of the plurality of battery packs;
while applying the charging voltage to the plurality of battery packs, obtaining (130) a current reading (64) from each of the plurality of battery packs that is charging; and
in response to the obtained current reading from a battery pack being below a minimum threshold current (66), increasing (170) the charging voltage by a voltage step value (68, 214).

2. The method of claim 1, wherein the method further comprises, in response to any of the obtained current readings being above a maximum threshold current (70), decreasing the charging voltage by less than the voltage step value.

3. The method of any of the above claims, wherein the method further comprises, in response to any of the obtained current readings being above a maximum threshold current (70), decreasing (182) the voltage step value.

4. The method of claim 3, whereby the voltage step value is decreased by being divided by 2.

5. The method of claim 3 or of claim 4, whereby the decreasing of the voltage step value comprises decreasing the voltage step value progressively at different decreasing values.

6. The method of any of the above claims, wherein the method further comprises, in response to detecting that (A) a charge protection switch (35) of at least one battery pack of the plurality of battery packs is open and (B) the charging voltage exceeds a voltage of every battery pack of the plurality of battery packs by at least a threshold amount, maintaining (157) the charging voltage until the charge protection switch of every battery pack of the plurality of battery packs is closed.

7. The method of claim 6, wherein the threshold amount is 1 volt.

8. The method of any of the above claims, wherein obtaining the voltage reading from each of the plurality of battery packs includes receiving the voltage reading from each of the plurality of battery packs, the voltage readings having been sent by a respective battery management system (38) of each of the plurality of battery packs.

9. The method of any of the above claims, wherein obtaining the current reading from each of the plurality of battery packs that is charging includes receiving the current reading from each of the plurality of battery packs that is charging, the obtained current readings having been sent by a respective battery management system (38) of each of the plurality of battery packs that is charging.

10. The method of any of the above claims, wherein obtaining the current reading from each of the plurality of battery packs that is charging includes letting (135) a predetermined time to elapse between subsequent current readings.

11. The method of any of the above claims, wherein, in response to detecting that the charging voltage has reached a maximum charge voltage threshold (74), maintaining the charging voltage at the maximum charge voltage threshold.

12. The method of any of the above claims, wherein, in response to determining that any of the battery packs is in an error state, maintaining the charging voltage until all errors have reset.

13. A charging apparatus (40) comprising:
charging circuitry (58) configured to connect to a plurality of battery packs in parallel; and
processing circuitry (52) configured to control the charging circuitry to operate according to any of the above method claims 1 to 12.

14. An uninterruptible power supply unit comprising the charging apparatus of claim 13 and the plurality of battery packs.

15. A computer program product comprising a non-transitory computer-readable storage medium (54) storing instructions, which, when performed by processing circuitry (52) of a charging apparatus (40), cause the charging apparatus to charge a plurality of battery packs in parallel in accordance with any of the above method claims 1 to 12.
